# EUROPEAN PATENT APPLICATION

(11) **EP 4 549 290 A1**
(43) Date of publication of application: **07.05.2025**
(21) Application number: 23206904.7
(22) Date of filing: 31.10.2023
(51) Int. Cl.: B62D 21/11, F16F 15/08

(54) **ASSEMBLY HAVING A DAMPING ELEMENT, METHOD FOR SETTING A DAMPING MODE OF A DAMPING ELEMENT OF SUCH AN ASSEMBLY**

(71) Applicant: Wuhan Lotus Cars Co., Ltd., Wuhan, Hubei (CN)
(72) Inventor: Wang, Meng, 65795 Hattersheim am Main (DE); Zuber, Armin, 33102 Paderborn (DE)
(74) Representative: Studio Torta S.p.A.

(57) **Abstract**

The present invention relates to an assembly (1) having a damping element (7). The present invention also relates to a method for setting a damping mode of a damping element (7) of such an assembly (1).

## Description

The present invention relates to an assembly having a damping element. The present invention also relates to a method for setting a damping mode of a damping element of such an assembly.

### Background of the invention

Conventionally, a vehicle's subframe is typically isolated from the vehicle body by one or more rubber bushings for comfort and noise vibration harshness reasons. The function of the rubber bushing is to isolate the noise and soften the impact from the vehicle's wheels by mounting the subframe to the body in an elastic manner.

However, on the track, the elastic rubber causes the vehicle dynamics to perform inaccurately. For example, when cornering, the subframe tilts around an x-axis under the torque caused by the left and right anti-roll bar attachments, which exerts a vertical force on the subframe. If the rear-wheel steering is mounted in the subframe, the inclination of the subframe also has a negative effect on steering accuracy.

If, on the other hand, the subframe is rigidly mounted directly to the body, noise isolation is poor. Shocks and jolts from the wheel are also transferred directly to the body without damping. If the engine is also mounted on the subframe, noise from the engine is also transferred to the body.

It is therefore the object of the present invention to provide means which make it possible to overcome the problems known from the state of the art.

The object is achieved by the subject matter of the independent claims. Preferred embodiments and preferred features are specified in the dependent claims and the following description.

### Summary of the invention

The object is solved according to a **first aspect** of the invention in that an assembly comprising a subframe and a body of a vehicle which are connected to each other via at least one damping element comprised by the assembly, wherein the assembly comprises at least one linear actuator having at least one actuator housing and at least one actuating element, wherein the actuator housing is attached to the subframe or the body, wherein different damping modes of the damping element can be set by actuating the actuating element, is proposed.

Thus, an elastic and a rigid connection can be provided interchangeably between the subframe and the body if a force acting on the subframe is selectively directed at least partially past a conventional damping element in the direction of the body. In that the actuating element is actuated, a clearance between the subframe and the body can be adjusted, hence, a compressibility of the damping element can be adjusted, hence, a type of the connection can be set.

This makes it possible, for example for a sports SUV for multi-purpose use, to provide a connection with the effect of an elastically isolated subframe when driving in town, and a connection with the effect of a rigid or fixed subframe when driving in sports mode or on the racetrack. In other words, it can thus be made possible to reduce the vibrations transferred to the body while still maintaining high steering accuracy.

Thus, with one and the same assembly it is possible to adapt the degree of damping between the subframe and the body according to the situation in which the vehicle is used. In certain driving situations, high stiffness can provide high motion control, while in other driving situations, low stiffness can improve comfort with respect to vibrations and noise.

For example, a wheel and/or an engine can be connected to the subframe, and during driving vibrations, noise, shocks and jolts acting on the wheel and/or generated by the engine can in turn act as said force on the subframe.

Preferably, by moving the actuating element to different positions a convergence of the subframe and the body is or can be controlled and/or a compression of the damping element is or can be controlled.

For example, the linear actuator may be designed so as to (i) put the actuating element into a first state, especially move the actuating element, especially the free end thereof, to a first position and/or extend the actuating element to a first degree, in which first state the actuating element affects the compressibility of the damping element to a first degree or does not affect the compressibility of the damping element and/or (ii) put the actuating element into a second state, especially move the actuating element, especially the free end thereof, to a second position and/or extend the actuating element to a second degree, in which second state the actuating element affects the compressibility of the damping element, especially to a second degree, which second degree represents a smaller compressibility than the first degree.

The actuating element may be in permanent direct or indirect force-transmitting contact with the body if the housing is attached to the body. The actuating element may be in permanent direct or indirect force-transmitting contact with the subframe if the housing is attached to the subframe.

In a preferred embodiment the actuating element extends from the body and/or towards the subframe and/or the actuating element extends from the subframe and/or towards the body.

Alternatively or in addition, in an embodiment a maximum compressibility of at least parts of the damping element by a relative movement of the subframe in a direction towards the body is different for at least two of the different damping modes.

For example, the maximum compressibility is observed along a vertical direction and or along a direction pointing from the body to the subframe.

Alternatively or in addition, in an embodiment in a first a damping mode the actuating element is retracted so that a free end of the actuating element is spaced from the respective one of the subframe and the body to which the actuator housing is not attached by a first clearance.

In the first damping mode, a transfer of vibrations and noise from the road and possibly from the engine to the body is beneficially reduced. Shocks and jolts can also be reduced.

For example, in the first damping mode the actuating element has no influence on the compressibility of the damping element.

In embodiments, in the first damping mode the subframe and the body are elastically coupled to each other.

In an embodiment the assembly is designed so that the linear actuator moves the actuating element such that it is retracted for setting the first damping mode.

Preferably, the assembly, especially the linear actuator, is designed such that the actuating element does not restrict, at least in the first damping mode, the freedom of movement of the subframe relative to the body for a movement of the subframe relative to the body which leads to a convergence of the subframe and the body.

Alternatively or in addition, in an embodiment in the first damping mode, a force acting on the subframe cannot be directed via the actuating element past the damping element in the direction towards the body.

Alternatively or in addition, in an embodiment in a second damping mode the actuating element is extended so that the free end of the actuating element abuts or is spaced by a second clearance from the respective one of the subframe and the body to which the actuator housing is not attached, wherein the second clearance is less than the first clearance.

In the second damping mode, high loads from vehicle inertia, road and engine torque can preferably be carried.

Preferably, when the actuating element is retracted, the extension of the actuating element along a main extension direction of the actuating element, especially outside of the housing, may be smaller compared to the extension of the actuating element along the main extension direction of the actuating element, especially outside of the housing, when the actuating element is extended.

Preferably, in the second damping mode compression of the damping element (especially at least for a part of the damping element arranged between the body and the subframe), especially substantially, is or can be prevented by the actuating element.

For example, in the first damping mode a particular force acting on the subframe causes a compression of the damping element of a first compression degree while preferably in the second damping mode the particular force acting on the subframe causes a compression of the damping element of a second compression degree, wherein preferably compared to the first compression degree the second compression degree represents a reduced compression of the damping element. Alternatively or in addition, in the second damping mode the particular force acting on the subframe causes no compression of at least parts of the damping element since the actuating element substantially prevents compression of the damping element.

For example, in the second damping mode the actuating element has an influence on the compressibility of the damping element.

In embodiments, in the second damping mode, especially for a particular force acting on the subframe, (i) the actuating element can be brought in force-transmitting and movement-restricting contact with the body and/or the subframe and/or (ii) the subframe and the body are rigidly coupled to each other. A rigid coupling may be established for example in that the actuating element is in a direct or indirect force-fit connection with both, the subframe and the body. In a force-transmitting contact with the body and/or the subframe the particular force acting on the subframe can be at least partially directed via the actuating element in the direction of the body.

For example, once the force-transmitting contact is established due to a relative movement of the subframe in a direction towards the body, an ongoing relative movement of the subframe towards the body is prevented.

In an embodiment the assembly is designed so that the linear actuator moves the actuating element such that it is extended for setting the second damping mode.

Alternatively or in addition, in an embodiment the second damping mode is or can be set in that the actuating element is or can be arranged so as to restrict the freedom of movement of the subframe relative to the body. For example, in the second damping mode, the actuating element restrict a convergence of the subframe and the body.

For example, a particular force acting on the subframe (A) can, in the first damping mode, be directed from the subframe in the direction of the body via the damping element while compressing the damping element, and/or (B) can, in the second damping mode, be directed from the subframe in the direction of the body at least partially (simultaneously and/or sequentially) past the damping element via the actuating element.

Preferably, the assembly, especially the linear actuator, is designed such that the actuating element does restrict, at least in the second damping mode, the freedom of movement of the subframe relative to the body for a movement of the subframe relative to the body which leads to a convergence of the subframe and the body.

Alternatively or in addition, in an embodiment in the second damping mode, a force acting on the subframe can be at least partly directed via the actuating element past the damping element in the direction towards the body.

Alternatively or in addition, in an embodiment in the first damping mode a further actuating element of the same or another linear actuator is retracted so that a free end of the further actuating element is spaced from a washer attached to the damping element by a third clearance.

In a preferred embodiment the further actuating element extends from the body and/or towards the washer and/or the further actuating element extends from the subframe and/or towards the washer.

Preferably, the actuating element and the further actuating element extend in opposite directions.

The further actuating element can be named as a second actuating element for the ease of differentiating it from the other actuating element, which can be named as a first actuating element.

The further actuating element may be in permanent direct or indirect force-transmitting contact with the body and/or with the subframe.

For example, in the first damping mode the further actuating element has no influence on the compressibility of the damping element.

In embodiments, in the first damping mode the subframe and the washer are elastically coupled to each other.

In an embodiment the assembly is designed so that the linear actuator (or the another linear actuator) moves the further actuating element such that it is retracted for setting the first damping mode.

Preferably, the assembly, especially the linear actuator (or the another linear actuator), is designed such that the further actuating element does not restrict, at least in the first damping mode, the freedom of movement of the subframe relative to the washer for a movement of the subframe relative to the washer which leads to an convergence of the subframe and the washer.

Preferably, in the first damping mode, a force acting on the washer cannot be directed via the further actuating element past the damping element in the direction towards the subframe.

Alternatively or in addition, in an embodiment the washer is attached to the damping element or a part thereof on a side of the subframe facing away from the body.

This way it is possible to adapt the force necessary which lead to a relative movement of the body in form of a convergence of the body and the subframe.

Alternatively or in addition, in an embodiment in the second damping mode the further actuating element is extended so that the free end of the further actuating element abuts or is spaced by a fourth clearance from the washer, wherein the fourth clearance is less than the third clearance.

The washer preferably provides an abutting surface for the further actuating element.

Preferably, when the further actuating element is retracted, the extension of the further actuating element along a main extension direction of the further actuating element, especially outside of the housing, may be smaller compared to the extension of the further actuating element along the main extension direction of the further actuating element, especially outside of the housing, when the further actuating element is extended.

Preferably, in the second damping mode compression of the damping element (especially at least for a part of the damping element arranged not between the body and the subframe), especially substantially, is or can be prevented by the further actuating element (i.e. the second actuating element).

Preferably, in the second damping mode compression of the damping element, especially substantially, is or can be prevented by the actuating element (i.e. the first actuating element) and the further actuating element (i.e. the second actuating element).

For example, in the first damping mode a particular force acting on the washer causes a compression of the damping element of a first compression degree while preferably in the second damping mode the particular force acting on the washer causes a compression of the damping element of a second compression degree, wherein preferably compared to the first compression degree the second compression degree represents a reduced compression of the damping element. Alternatively or in addition, in the second damping mode the particular force acting on the washer causes no compression of at least parts of the damping element since the further actuating element substantially prevents compression of the damping element.

For example, in the second damping mode the further actuating element has an influence on the compressibility of the damping element.

In embodiments, in the second damping mode, especially for a particular force acting on the subframe and/or the washer, (i) the further actuating element can be brought in force-transmitting and movement-restricting contact with the washer and/or the subframe and/or (ii) the subframe and the washer are rigidly coupled to each other. A rigid coupling may be established for example in that the further actuating element is in a direct or indirect force-fit connection with both, the subframe and the washer. In a force-transmitting contact with the subframe and/or the washer the particular force acting on the washer can be at least partially directed via the further actuating element in the direction of the subframe.

For example, once the force-transmitting contact is established due to a relative movement of the subframe in a direction towards the washer, an ongoing relative movement of the subframe towards the washer is prevented.

In an embodiment the assembly is designed so that the linear actuator (or the another linear actuator) moves the further actuating element such that it is extended for setting the second damping mode.

Alternatively or in addition, in an embodiment the second damping mode is or can be set in that the further actuating element is or can be arranged so as to restrict the freedom of movement of the subframe relative to the washer. For example, in the second damping mode, the further actuating element restrict a convergence of the subframe and the washer.

For example, a particular force acting on the washer (A) can, in the first damping mode, be directed from the washer in the direction of the subframe via the damping element while compressing the damping element, and/or (B) can, in the second damping mode, be directed from the washer in the direction of the subframe at least partially (simultaneously and/or sequentially) past the damping element via the further actuating element.

Preferably, the assembly, especially the linear actuator (or the another linear actuator), is designed such that the further actuating element does restrict, at least in the second damping mode, the freedom of movement of the subframe relative to the washer for a movement of the subframe relative to the washer which leads to a convergence of the subframe and the washer.

Alternatively or in addition, in an embodiment in the second damping mode, a force acting on the washer can be at least partly directed via the further actuating element past the damping element in the direction towards the subframe and/or the body.

Thus, a degree of compressibility of the damping element can be adapted.

Alternatively or in addition, in an embodiment damping element is a rubber bushing, such as an elastic rubber bushing.

Alternatively or in addition, in an embodiment the linear actuator is an electric actuator, preferably a linear motor, such as a linear magnetic motor, a pneumatic actuator and/or hydraulic actuator.

Alternatively or in addition, in an embodiment the actuating element and/or the further actuating element, respectively, is a slider, a rotor, a rod, especially a threaded rod such as a spindle, and/or a screw.

Alternatively or in addition, in an embodiment the actuator housing is attached to the subframe mount sleeve.

The object is solved according to a **second aspect** of the invention in that a method for adjusting a damping mode of at least one damping element, especially a damping element comprised by an assembly according to any one of the preceding claims, by means of which a subframe and a body of a vehicle are connected to each other, the method comprising actuating at least one actuating element of at least one linear actuator having at least one actuator housing, wherein the actuator housing is attached to the subframe or the body, wherein the actuating element is actuated to set a damping mode of the damping element, especially the actuating element is actuated to a retracted position to set a first damping mode and/or to an extended position to set a second damping mode, wherein preferably a maximum compressibility is different for at least two of at least two different damping modes, is proposed.

All advantages described with respect to the assembly according to the first aspect of the invention also apply accordingly to the method according to the second aspect of the invention. Therefore, reference can be made at this point to the previous explanations.

The features (especially structural and functional features) described in relation to the assembly according to the first aspect of the invention may also be provided accordingly in each of the parts, steps and relations relevant for the method according to the second aspect of the invention, individually and in any combination, unless the context indicates otherwise.

The subframe, the body, the damping element and/or the linear actuator may be comprised by an assembly, such as an assembly according to the first aspect of the invention.

### Brief description of the drawings

For a better understanding of embodiments of the invention and to show how the same may be carried into effect, reference will now be made, purely by way of example, to the accompanying drawings in which like numerals designate corresponding elements or sections throughout.

In the accompanying drawings:
- Fig. 1a: shows a first embodiment of an assembly according to the first aspect of the invention in a first damping mode;
- Fig. 1b: shows the assembly of Fig. 1a in a second damping mode;
- Fig. 2a: shows a second embodiment of an assembly according to the first aspect of the invention in a first damping mode;
- Fig. 2b: shows the assembly of Fig. 2a in a second damping mode;
- Fig. 3a: shows a third embodiment of an assembly according to the first aspect of the invention in a first damping mode; and
- Fig. 3b: shows the assembly of Fig. 3a in a second damping mode.

### Detailed description of the drawings

Various examples of embodiments of the present invention will be explained in more detail by virtue of the following embodiments illustrated in the figures and/or described below.

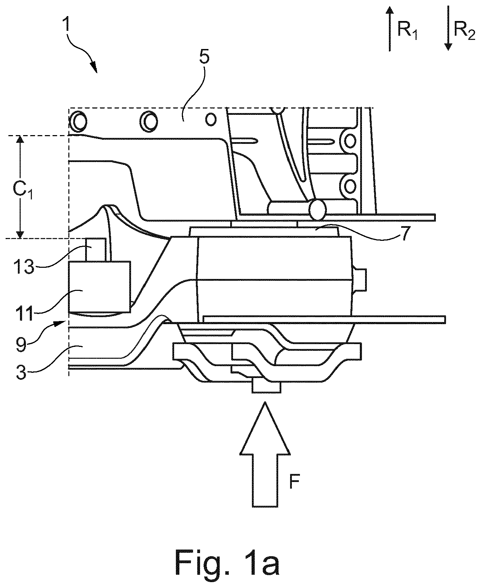

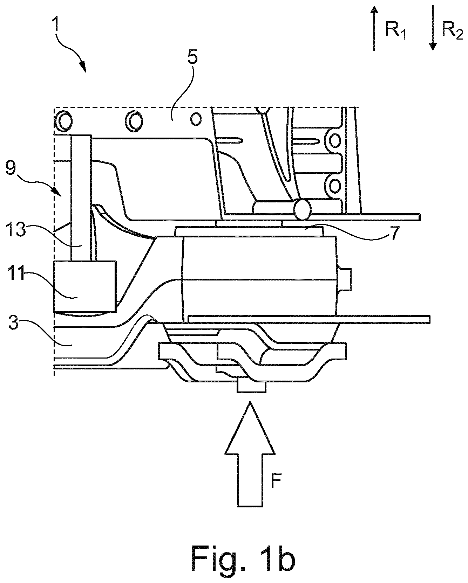

Figs. 1a and 1b show a first embodiment of an assembly 1 according to the first aspect of the invention in different damping modes.

Assembly 1 comprises a subframe 3 and a body 5 of a vehicle. The assembly 1 also comprises a damping element 7, here a rubber bushing, by means of which the subframe 3 and the body 5 are connected to each other.

The assembly 1 further comprises a linear actuator 9 which has an actuator housing 11 and an actuating element 13, here in form of a rod which is designed as a screw or spindle. The actuator housing 11 is attached to the subframe 3.

By actuating the linear actuator 9, the actuating element 13 can be displaced reciprocally back and forth along a direction R1. In other words, the actuating element 13 (rod) can be extended and retracted by actuating the actuating element 13. By actuating the actuating element 13 (and thereby especially displacing an end section thereof) accordingly, different damping modes of the damping element 7 can be set, wherein a maximum compressibility of (at least parts of) the damping element 7 is different for at least two of the different damping modes, as described in more detail below.

Fig. 1a shows the actuating element 13 being retracted (i.e. it is in a first position). With the actuating element 13 being in this position, a first damping mode of the damping element 7 is set.

In the first damping mode, the actuating element 13 is retracted so that a free end of the actuating element 13 is spaced from the body 5 (to which the actuator housing 11 is not attached) by a first clearance C₁. A particular force F which is acting along the direction indicated by the respective arrow in Figs. 1a and 1b is directed from the subframe 3 in the direction of the body 5 (only or substantially) via the damping element 7 while causing a compression of the damping element 7. The compression of the damping element 7 absorbs energy introduced by the force F. Thus, the actuating element 13 has no effect on the compressibility of the damping element 7 during action of the force F in the first damping mode (since even a full compression of the damping element 7 is at least in principle possible by a respective strong force F).

Fig. 1b shows the actuating element 13 being extended (i.e. it has been moved to a second position). With the actuating element 13 being in this position, a second damping mode of the damping element 7 is set.

In the second damping mode the actuating element 13 is extended so that the free end of the actuating element 13 abuts (or alternatively is spaced by a second clearance, which is less than the first clearance, from) the body 5 (to which the actuator housing is not attached).

In the second damping mode, the force F acting on the subframe 3 can be at least partly directed via the actuating element 9 past the damping element 7 in the direction towards the body 5. Thus, with the actuating element 9 being extended a compression of (at least parts of) the damping element 7 as a result of the action of the force F (the same which were assumed in the scenario described with respect to Fig. 1a) can be avoided or reduced.

In the case in which the second damping mode is set, when the force F is acting along the direction indicated by the respective arrow on the subframe 3, the subframe 3 converges or approaches the body 5 unless the actuating element 13 abuts the body 3. Hence, the freedom of movement of the subframe 3 relative to the body 5 along the direction R₁ is restricted by the actuating element 13. This is because during action of the force F, the subframe 3 can converge the body 5 only unless the end section of the rod gets in contact with the body 5. Once this happens, the actuating element 13 is in force-transmitting and movement-restricting contact with the body 5. Then a further converging of the subframe 3 in the direction of the body 5 is not possible. It is noted that the actuating element 13 is also in (indirect) contact with the subframe 3 via parts of the linear actuator 9.

Once said force-transmitting contact (i.e. at least an indirect connection of the subframe 3 and the body 5 via the actuating element 13) is established, the subframe 3 and the body 5 is rigidly coupled to each other and the force F is then directed from the subframe 3 in the direction of the body 5 at least partially past the damping element 7 via the actuating element 13. By adapting the extent to which the actuating element 13 is extended is changed, the compressibility of the damping element 7 (i.e. the possible amount to which the damping element 7 can be compressed) by action of the force F can be controlled, hence, the degree of damping, hence the damping mode of the damping element 7.

Thus, the damping mode of the damping element 7 can be set in that the actuating element 13 is moved between the first and second position in the described manner so as to either allow full or no or less compression of (at least parts of) the damping element 7 upon action of the force F.

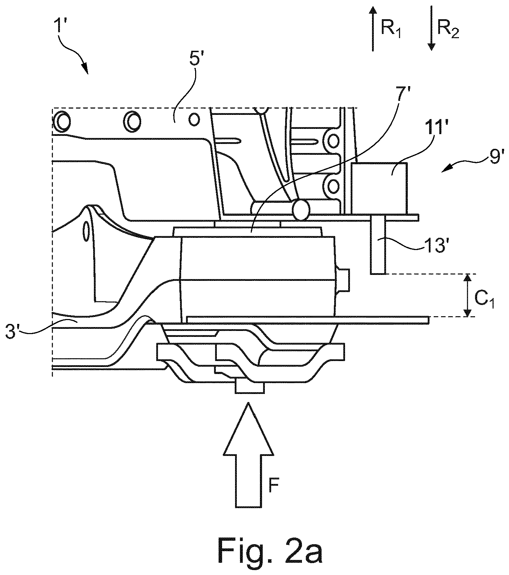

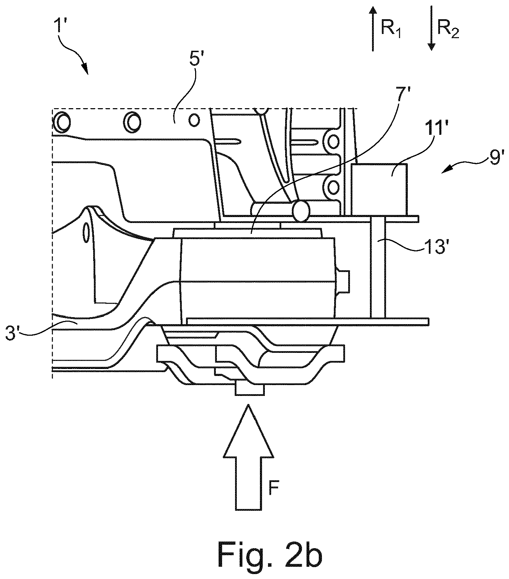

Figs. 2a and 2b show a second embodiment of an assembly 1' according to the first aspect of the invention in different damping modes.

The assembly 1' of the second embodiment is similar to the assembly 1 of the first embodiment, which is why features that are the same or identical to features of the assembly 1 of the first embodiment in the assembly 1' of the second embodiment have the same but single dashed reference signs. Furthermore, only the differences between the assemblies 1' and 1 of the second and first embodiments are discussed, while in all other respects the description given for the assembly 1 of the first embodiment also applies here mutatis mutandis.

For the assembly 1', the housing 11' is firmly attached to the body 5'. By actuating the actuating element 13', the actuating element 13' can be displaced reciprocally back and forth along a direction R₂. In other words, the actuating element 13' (rod) can be extended and retracted by actuating the actuating element 13'. By actuating the actuating element 13' (and thereby especially displacing an end section thereof) accordingly, different damping modes of the damping element 7' can be set, wherein a maximum compressibility of (at least parts of) the damping element 7' is different for at least two of the different damping modes, likewise as described above.

Fig. 2a shows the actuating element 13' being retracted (i.e. it is in a first position). With the actuating element 13' being in this position, a first damping mode of the damping element 7' is set.

In the first damping mode, a particular force F which is acting along the direction indicated by the respective arrow in Figs. 2a and 2b is directed from the subframe 3' in the direction of the body 5 (only or substantially) via the damping element 7' while causing a compression of the damping element 7'. This is similar as described above with respect to Fig. 1a.

Fig. 1b shows the actuating element 13' being extended (i.e. it has been moved to a second position). With the actuating element 13' being in this position, a second damping mode of the damping element 7' is set.

In the second damping mode the actuating element 13' is extended so that the free end of the actuating element 13' abuts (or alternatively is spaced by a second clearance, which is less than the first clearance, from) the subframe 5' (to which the actuator housing is not attached). This is similar as described above with respect to Fig. 1b.

Thus, once the free end of the actuating element 13' abuts the subframe 5' the actuating element 13' is in force-transmitting and movement-restricting contact with the subframe 3'. Then a further converging between the subframe 3' and the body 5' is not possible. Furthermore, once said force-transmitting contact is established, the force F is then directed from the subframe 3' in the direction of the body 5' at least partially past the damping element 7' via the actuating element 13'.

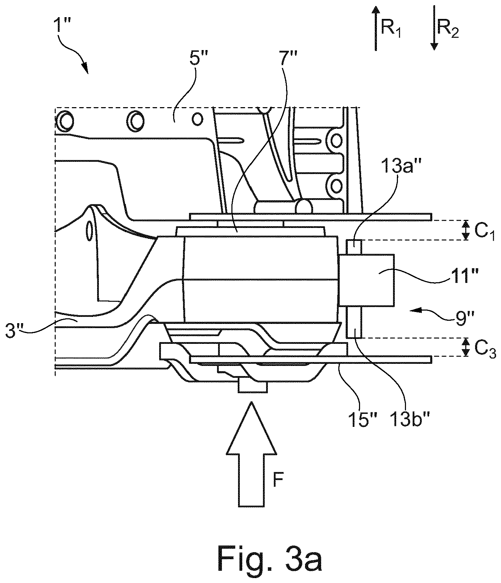

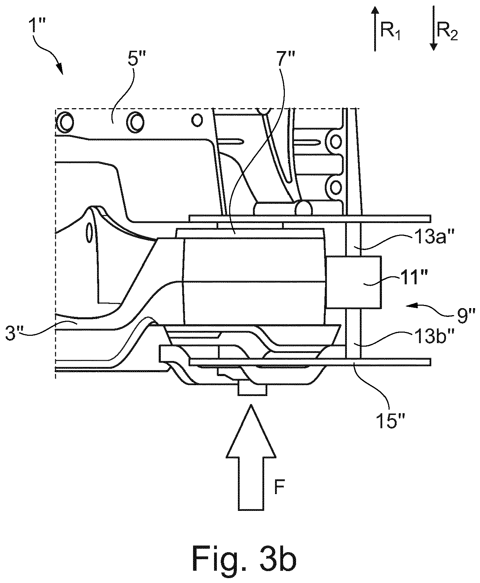

Figs. 3a and 3b show a third embodiment of an assembly 1" according to the first aspect of the invention in different damping modes.

The assembly 1" of the third embodiment is similar to the assembly 1' of the second embodiment, which is why features that are the same or identical to features of the assembly 1' of the second embodiment in the assembly 1" of the third embodiment have the same but double dashed reference signs. Furthermore, only the differences between the assemblies 1" and 1' of the third and second embodiments are discussed, while in all other respects the description given for the assembly 1' of the second embodiment also applies here mutatis mutandis.

For the assembly 1", two actuating elements 13a" and 13b", a (first) actuating element 13a" and a further (or second) actuating element 13b", each in form of a rod are provided for the linear actuator 9". The actuating elements 13a" and 13b" can respectively be designed here as a spindle. The housing 11" is firmly attached to the subframe 3". By actuating the actuating element 13a" and 13b", the first actuating element 13a" can be displaced back and forth along the direction R₁ and the second actuating element 13b" can be displaced back and forth along the direction R₂. In other words, the actuating elements 9a", 9b" can be extended and retracted by actuating the actuating element 13a" and 13b".

By actuating the actuating elements 13a" and 13b" (and thereby especially displacing an end section of each one of the actuating elements 13a" and 13b") accordingly, different damping modes of the damping element 7" can be set, wherein a maximum compressibility of (at least parts of) the damping element 7" is different for at least two of the different damping modes, likewise as described above.

Fig. 3a shows the actuating elements 13a" and 13b' being retracted (i.e. they are both in a first position). With the actuating elements 13a" and 13b' being in this position, a first damping mode of the damping element 7" is set.

In the first damping mode, the first actuating element 13a" is retracted so that a free end of the first actuating element 13a" is spaced from the body 5 (to which the actuator housing 11" is not attached) by a first clearance C₁ and the second actuating element 13b" is retracted so that a free end of the second actuating element 13b" is spaced from a washer 15" which is attached to the damping element 7" on a side of the subframe 3" facing away from the body 5" by a third clearance C₃.

In the first damping mode, a particular force F which is acting along the direction indicated by the respective arrow in Figs. 3a and 3b is directed from the subframe 3' in the direction of the body 5 (only or substantially) via the damping element 7' while causing a compression of the damping element 7'. This is similar as described above with respect to Fig. 1a.

Fig. 3b shows the actuating elements 13a" and 13b" being extended (i.e. they both have been moved to a second position). In the second damping mode the first actuating element 13a" is extended so that the free end of the first actuating element 13a" abuts (or alternatively is spaced by a second clearance, which is less than the first clearance, from) the body 5" (to which the actuator housing 11" is not attached). In the second damping mode the second actuating element 13b" is extended so that the free end of the second actuating element 13b" abuts (or alternatively is spaced by a fourth clearance, which is less than the third clearance, from) the washer 15". With the actuating elements 13a" and 13b" being in this position, a second damping mode of the damping element 7" is set.

In the second damping mode, the force F acting on the subframe 3" can be at least partly directed via the first actuating element 13a" and/or the second actuating element 13b" past the damping element 7" in the direction towards the body 5'.

In the case in which the second damping mode is set, when the force F is acting along the direction indicated by the respective arrow on the subframe 3", the subframe 3" converges or approaches the body 5" unless the first actuating element 13a" abuts the body 3". Hence, the freedom of movement of the subframe 3" relative to the body 5" along the direction R₁ is restricted by the first actuating element 13a". Once this happens, the first actuating element 13a" is in force-transmitting and movement-restricting contact with the body 5". Then a further converging of the subframe 3" in the direction of the body 5" is not possible. This is similar as described above with respect to Fig. 1a. Furthermore, when the force F is acting along the direction indicated by the respective arrow on the subframe 3", the washer 15" converges or approaches the subframe 3" unless the second actuating element 13b" abuts the washer 15". Hence, the freedom of movement of the subframe 3" relative to the washer 15" along the direction R₁ is restricted by the second actuating element 13b". Once this happens, the second actuating element 13b" is in force-transmitting and movement-restricting contact with the washer 15". Then a further converging of the subframe 3" and the washer 15" is not possible (but still a further converging of the subframe 3" and the body 5", as long as the first actuating element 13a" does not yet abut body 5").

Thus, once the free end of the first actuating element 13a" abuts the body 5" the first actuating element 13a" is in force-transmitting and movement-restricting contact with the body 5'. Then a further converging between the subframe 3" and the body 5" is not possible. Furthermore, a force-transmitting contact is established, so that the force F is then directed from the subframe 3" in the direction of the body 5" at least partially past the damping element 7" via the first actuating element 13a".

Thus, once the free end of the second actuating element 13b" abuts the washer 15" the second actuating element 13b" is in force-transmitting and movement-restricting contact with the washer 15'. Then a further compression of parts of the subframe (on the side faced away from the body 5") is not possible. Furthermore, a force-transmitting contact is established, so that the force F is then directed from the washer 15" in the direction of the subframe 3" at least partially past the damping element 7" via the second actuating element 13b".

Once said force-transmitting contact (i.e. at least an indirect connection of the subframe 3" and the body 5" via the first actuating element 13a") is established, the subframe 3" and the body 5" is rigidly coupled to each other and the force F is then directed from the subframe 3" in the direction of the body 5" at least partially past the damping element 7" via the first actuating element 13a". By adapting the extent to which the second actuating element 13b" is extended, the force required so that the first actuating element 13a" abuts the body can be controlled.

Or in other words, by adapting the extent to which the second actuating element 13b" is extended, a particular force is absorbed more or less by virtue of compression parts of the damping element arranged between the washer and the subframe.

Thus, the damping mode of the damping element 7" can be set in that the actuating elements 13a" and 13b" are moved between the positions in the described manner.

### List of reference signs

- 1, 1', 1": Assembly
- 3, 3', 3": Subframe
- 5, 5', 5": Body
- 7, 7', 7": Damping element
- 9, 9', 9": Linear actuator
- 11, 11', 11": Actuator housing
- 13, 13': Actuating element
- 13a", 13b": Actuating element
- 15": Washer
- C₁: First Clearance
- C₃: Third Clearance
- F: Force
- R₁, R₂: Direction

## Claims

1. Assembly comprising a **subframe** and a **body** of a vehicle which are connected to each other via at least one **damping element** comprised by the assembly, wherein the assembly comprises at least one **linear actuator** having at least one **actuator housing** and at least one **actuating element,** wherein the actuator housing is attached to the subframe or the body, wherein different damping modes of the damping element can be set by actuating the actuating element.

2. Assembly according to claim 1, wherein a maximum compressibility of at least parts of the damping element by a relative movement of the subframe in a direction towards the body is different for at least two of the different damping modes.

3. Assembly according to any one of the preceding claims, wherein in a **first a damping mode** the actuating element is retracted so that a free end of the actuating element is spaced from the respective one of the subframe and the body to which the actuator housing is not attached by a first clearance.

4. Assembly according to claim 3, wherein in the first damping mode, a force acting on the subframe cannot be directed via the actuating element past the damping element in the direction towards the body.

5. Assembly according to any one of the claims 3 to 4, wherein in a **second damping mode** the actuating element is extended so that the free end of the actuating element abuts or is spaced by a second clearance from the respective one of the subframe and the body to which the actuator housing is not attached, wherein the second clearance is less than the first clearance.

6. Assembly according to claim 5, wherein in the second damping mode, a force acting on the subframe can be at least partly directed via the actuating element past the damping element in the direction towards the body.

7. Assembly according to any one of the claims 3 to 6, wherein in the **first damping mode** a **further actuating element** of the **same or another linear actuator** is retracted so that a free end of the further actuating element is spaced from a **washer** attached to the damping element by a third clearance.

8. Assembly according to claim 7, wherein the washer is attached to the damping element or a part thereof on a side of the subframe facing away from the body.

9. Assembly according to any one of the claims 7 to 8, wherein in the **second damping mode** the further actuating element is extended so that the free end of the further actuating element abuts or is spaced by a fourth clearance from the washer, wherein the fourth clearance is less than the third clearance.

10. Assembly according to claim 9, wherein in the second damping mode, a force acting on the washer can be at least partly directed via the further actuating element past the damping element in the direction towards the subframe and/or the body.

11. Assembly according to any one of the preceding claims, wherein the damping element is a rubber bushing, such as an elastic rubber bushing.

12. Assembly according to any one of the preceding claims, wherein the linear actuator is an electric actuator, preferably a linear motor, such as a linear magnetic motor, a pneumatic actuator and/or hydraulic actuator.

13. Assembly according to any one of the preceding claims, wherein the actuating element and/or the further actuating element, respectively, is a slider, a rotor, a rod, especially a threaded rod such as a spindle, and/or a screw.

14. Assembly according to any one of the preceding claims, wherein the actuator housing is attached to the subframe mount sleeve.

15. Method for adjusting a damping mode of at least one damping element, especially a damping element comprised by an assembly according to any one of the preceding claims, by means of which a **subframe** and a **body** of a vehicle are connected to each other, the method comprising actuating at least one **actuating element** of at least one **linear actuator** having at least one **actuator housing,** wherein the actuator housing is attached to the subframe or the body, wherein the actuating element is actuated to set a damping mode of the damping element, especially the actuating element is actuated to a retracted position to set a first damping mode and/or to an extended position to set a second damping mode, wherein preferably a maximum compressibility of at least parts of the damping element is different for at least two of at least two different damping modes.

## Amended claims

### Amended claims in accordance with Rule 137(2) EPC.

1. Assembly (1, 1', 1") comprising a subframe (3, 3', 3") and a body (5, 5', 5") of a vehicle which are connected to each other via at least one damping element (7, 7', 7") comprised by the assembly (1, 1', 1"), wherein the assembly (1, 1', 1") comprises at least one linear actuator (9, 9', 9") having at least one actuator housing (11, 11', 11") and at least one actuating element (13, 13'), wherein the actuator housing (11, 11', 11") is attached to the subframe (3, 3', 3") or the body (5, 5', 5"), wherein different damping modes of the damping element (7, 7', 7") can be set by actuating the actuating element (13, 13').

2. Assembly (1, 1', 1") according to claim 1, wherein a maximum compressibility of at least parts of the damping element (7, 7', 7") by a relative movement of the subframe (3, 3', 3") in a direction towards the body (5, 5', 5") is different for at least two of the different damping modes.

3. Assembly (1, 1', 1") according to any one of the preceding claims, wherein in a first a damping mode the actuating element (13, 13') is retracted so that a free end of the actuating element (13, 13') is spaced from the respective one of the subframe (3, 3', 3") and the body (5, 5', 5") to which the actuator housing (11, 11', 11") is not attached by a first clearance (C₁).

4. Assembly (1, 1', 1") according to claim 3, wherein in the first damping mode, a force (F) acting on the subframe (3, 3', 3") cannot be directed via the actuating element (13, 13') past the damping element (7, 7', 7") in the direction towards the body (5, 5', 5").

5. Assembly (1, 1', 1") according to any one of the claims 3 to 4, wherein in a second damping mode the actuating element (13, 13') is extended so that the free end of the actuating element (13, 13') abuts or is spaced by a second clearance from the respective one of the subframe (3, 3', 3") and the body (5, 5', 5") to which the actuator housing (11, 11', 11") is not attached, wherein the second clearance is less than the first clearance (C₁).

6. Assembly (1, 1', 1") according to claim 5, wherein in the second damping mode, a force (F) acting on the subframe (3, 3', 3") can be at least partly directed via the actuating element (13, 13') past the damping element (7, 7', 7") in the direction towards the body (5, 5', 5").

7. Assembly (1, 1', 1") according to any one of the claims 3 to 6, wherein in the first damping mode a further actuating element (13, 13') of the same or another linear actuator (9, 9', 9") is retracted so that a free end of the further actuating element (13, 13') is spaced from a washer (15") attached to the damping element (7, 7', 7") by a third clearance (C₃).

8. Assembly (1, 1', 1") according to claim 7, wherein the washer (15") is attached to the damping element (7, 7', 7") or a part thereof on a side of the subframe (3, 3', 3") facing away from the body (5, 5', 5").

9. Assembly (1, 1', 1") according to any one of the claims 7 to 8, wherein in the second damping mode the further actuating element (13, 13') is extended so that the free end of the further actuating element (13, 13') abuts or is spaced by a fourth clearance from the washer (15"), wherein the fourth clearance is less than the third clearance.

10. Assembly (1, 1', 1") according to claim 9, wherein in the second damping mode, a force (F) acting on the washer (15") can be at least partly directed via the further actuating element (13, 13') past the damping element (7, 7', 7") in the direction towards the subframe (3, 3', 3") and/or the body (5, 5', 5").

11. Assembly (1, 1', 1") according to any one of the preceding claims, wherein the damping element (7, 7', 7") is a rubber bushing, such as an elastic rubber bushing.

12. Assembly (1, 1', 1") according to any one of the preceding claims, wherein the linear actuator (9, 9', 9") is an electric actuator, preferably a linear motor, such as a linear magnetic motor, a pneumatic actuator and/or hydraulic actuator.

13. Assembly (1, 1', 1") according to any one of the preceding claims, wherein the actuating element (13, 13') and/or the further actuating element (13, 13'), respectively, is a slider, a rotor, a rod, especially a threaded rod such as a spindle, and/or a screw.

14. Assembly (1, 1', 1") according to any one of the preceding claims, wherein the actuator housing (11, 11', 11") is attached to the subframe (3, 3', 3") mount sleeve.

15. Method for adjusting a damping mode of at least one damping element (7, 7', 7"), especially a damping element (7, 7', 7") comprised by an assembly (1, 1', 1") according to any one of the preceding claims, by means of which a subframe and a body (5, 5', 5") of a vehicle are connected to each other, the method comprising actuating at least one actuating element (13, 13') of at least one linear actuator (9, 9', 9") having at least one actuator housing (11, 11', 11"), wherein the actuator housing (11, 11', 11") is attached to the subframe (3, 3', 3") or the body (5, 5', 5"), wherein the actuating element (13, 13') is actuated to set a damping mode of the damping element (7, 7', 7"), especially the actuating element (13, 13') is actuated to a retracted position to set a first damping mode and/or to an extended position to set a second damping mode, wherein preferably a maximum compressibility of at least parts of the damping element (7, 7', 7") is different for at least two of at least two different damping modes.
